# EUROPEAN PATENT SPECIFICATION

(11) **EP 4 270 132 B1**
(45) Date of publication and mention of the grant of the patent: **11.09.2024**
(21) Application number: 23166455.8
(22) Date of filing: 04.04.2023
(51) Int. Cl.: G05D 1/00, G01C 23/00

(54) **CONTROL SYSTEM AND METHOD FOR CONTROLLING A FIRST OR A SECOND AGRICULTURAL MACHINE**
STEUERUNGSSYSTEM UND VERFAHREN ZUR STEUERUNG EINER ERSTEN ODER EINER ZWEITEN LANDWIRTSCHAFTLICHEN MASCHINE
SYSTÈME DE COMMANDE ET PROCÉDÉ DE COMMANDE D'UNE PREMIÈRE OU D'UNE SECONDE MACHINE AGRICOLE

(30) Priority: 28.04.2022 GB 202206175
(43) Date of publication of application: 01.11.2023
(73) Proprietor: AGCO International GmbH, 8212 Neuhausen am Rheinfall (CH)
(72) Inventor: BARZEN, Alexander, 76275 Ettlingen (DE); RUF, Tobias, 87616 Marktoberdorf (DE)
(74) Representative: AGCO Intellectual Property Department

(56) References cited:
- WO-A1-2016/126459
- US-A1- 2020 319 649
- US-A1- 2021 053 229

## Description

### FIELD

The present disclosure relates generally to a control system, a human machine interface (HMI) and a method for controlling a first or a second agricultural machine.

### BACKGROUND

WO 2015/006609 A1 discloses an auto-networking system for establishing a machine-to-machine communication between two agricultural machines. The network may be established in an ad hoc fashion if the two agricultural machines approach close enough to each other. The agricultural machines may communicate operational parameters, for example to determine the current status of the other agricultural machine. The parameters may include a wayline for each agricultural machine, current load, fuel status, up-to-date worked field history (e. g., area covered by dispensed chemicals, grain harvested, etc.), among other operational parameters. The shared parameters may be displayed on respective display screens (e. g., cab monitors, headsets, etc.) of each machine.

WO 2016/126459 A1 discloses a method of controlling a plurality of robotic vehicles by a single operator by determining a state of each robotic vehicle, assigning a robotic vehicle to an operator in response to a binding command from the operator, allowing the robotic vehicle to be commanded by the operator and releasing the robotic vehicle in response to an unbinding command from the operator. The operator may comprise a graphical user interface GUI which can be used to display a number of different types of control panels like a primary control panel to select specific commands for a bound robotic vehicle and a second control panel to view a fleet status panel. The operator may be able to reconfigure the control panels displayed on the display as necessary or desired.

US2021/0053229 A1 discloses a method for the deployment of a plurality of robots to perform a respective plurality of agricultural task. Once a robot has reached the individual plant it is determined if the robot is capable of performing the agricultural task on its own. If this is not the case, an operator can receive manual control with an interface and control the robot manually to perform the agricultural task correctly.

US 2020/0319649 A1 discloses an agricultural support device comprising a traveling creator to create a scheduled traveling route of an agricultural machine, a display controller to display the virtual traveling status of the agricultural machine on an external terminal to travel on the created route and a correction permitting controller so the created route can be corrected with the external terminal.

### BRIEF SUMMARY

An operator controlled agricultural machine and an unmanned, autonomously operating agricultural machine may be connected by a machine-to-machine communication to send control signals between the operator controlled agricultural machine and the autonomously operating agricultural machine for an human intervention of the autonomous operation. Since a human intervention may require a high attention for controlling two agricultural machines simultaneously it is an objective to enhance the safety for such an intervention.

According to an aspect of the invention there is provided a human machine interface for controlling a first or a second agricultural machine. The human machine interface includes a display unit for displaying a first graphical user interface assigned to the first agricultural machine and a second graphical user interface assigned to the second agricultural machine, at least one input element for switching between the first and the second graphical user interface and a control unit. The control unit comprises a first control scheme configured to detect a contact of the input element by an operator, to control the display unit to display the second graphical user interface while the input element is in contact with the operator and to control the display unit to display the first graphical user interface while the input element is out of contact with the operator.

The human machine interface may be used to control the first agricultural machine or the second agricultural machine or both agricultural machines simultaneously. The first agricultural machine may be operator controlled whereas the second agricultural machine may operate autonomously.

The display unit of the human machine interface may display the first graphical user interface assigned to the first agricultural machine comprising important information for the operator of the first agricultural machine for controlling the first agricultural machine and for monitoring the working process. The display unit may also be used by the operator to control the second agricultural machine and to monitor the working process of the second agricultural machine when the display unit displays the second graphical user interface. To reduce the risk of a confusion of the operator due to an unintentional displaying of the graphical user interface assigned to the agricultural machine other than the agricultural machine controlled by the operator the input element for switching between the two graphical user interfaces is designed analogously to a dead man switch. As long as a contact of the operator with the input element is present the second graphical user interface assigned to the second agricultural machine is displayed on the display unit. When the contact of the operator with the input element is interrupted the first graphical user interface assigned to the first agricultural machine is displayed on the display unit. Thus, the safety for a human intervention to monitor and control the unmanned second agricultural machine may be enhanced.

The second graphical user interface may be duplicated when it is displayed on the display unit. The second graphical user interface may be adapted to the resolution of the display unit.

The control unit may also include a second control scheme configured to detect a toggling of the input element by an operator. The control unit may control the display unit to display alternately the first or the second graphical user interface if a toggling of the input element is detected.

As an alternative to the first control scheme according to which the at least one input element works analogously as a dead man's switch, the control unit may additionally comprise a second control scheme according to which the at least one input element works analogously as a toggle switch for detecting a toggling of the at least one input element. The selection of the first or the second control scheme may be controlled automatically by the control unit. Optionally, the operator may select manually the first or the second control scheme.

The control unit may also be configured to determine a speed of the first agricultural machine and to compare the speed of the first agricultural machine with a speed threshold.

The first agricultural machine may comprise a speed sensor to determine the (driving) speed of the first agricultural machine and to send the speed signal to the control unit. The speed threshold may be a parameter stored in a memory of the control unit. The speed threshold may be a value from 0 to 6 km/h, for example. The speed threshold may be defined by the operator.

The control unit may operate according to the first control scheme if the speed of the first agricultural machine is exceeding the speed threshold.

For a very safe control of the agricultural machines the speed threshold may be 0 (zero) so that the dead man's switch functionality of the at least one input element will be active if the first agricultural machine is moving.

The control unit may operate according to the second control scheme if the speed of the first agricultural machine is below or equal to the speed threshold.

The lower the speed threshold is set the more the safety for controlling the agricultural machines may be enhanced. If the speed threshold is equal to 0 (zero) the toggle switch functionality of the at least one input element will be active only if the first agricultural machine is at standstill.

The input element may be a foot actuatable switch.

The foot actuatable switch may be a pedal or a button. The foot actuatable switch may comprise a proximity sensor to detect a permanent contact of the foot with the foot actuatable switch. Since the hands are not needed to operate the input element the operator has both hands free to control the agricultural machines. Hence, the safe control of the agricultural machines may be improved.

The at least one input element may be integrated into the display unit.

The input element may be a key of a keypad integrated into the display unit. In case of two or more input elements one input element may be a foot actuatable switch and the other input element may be a key of the display unit.

The human machine interface may also include an additional display unit for displaying an additional graphical user interface assigned to the second agricultural machine. The first control scheme may be configured to control the additional display unit to display the additional graphical user interface while the input element is in contact with the operator.

If the size of one display unit is too small to display the complete content of the second graphical user interface of the second agricultural machine the content of the second graphical user interface can be split up in two parts by the control unit. One part may be displayed on the one display unit and the other part may be displayed on the additional display unit. Thus, the operator gets full control over the second agricultural machine.

The human machine interface may also include a control element. The first control scheme may be configured to assign the control element to the second agricultural machine while the input element is in contact with the operator. The second control scheme may be configured to assign alternately the control element to the first or the second agricultural machine if a toggling of the input element is detected.

The control element may be a lever, a joystick, a steering wheel, a potentiometer or any other input device to control the agricultural machines, e. g. to control the driving speed or the driving direction of the agricultural machines or to control any function of the implements. So, the assignment of the control element may switch together with the switching of the graphical user interfaces so that the control element and the display unit of the human machine interface of the first agricultural machine may always be related to one of the agricultural machines. I. e., when the first graphical user interface of the first agricultural machine is displayed on the display unit the control element is assigned to the first agricultural machine whereas when the second graphical user interface of the second agricultural machine is displayed on the display unit the control element is assigned to the second agricultural machine.

As mentioned above the second agricultural machine may be an autonomously controlled machine.

The second agricultural machine may steer, accelerate or decelerate autonomously as well as control autonomously any other function of the machine and the implement. The second agricultural machine may follow the first agricultural machine with a constant distance, e. g. driving in a parallel track or wayline for the purpose of a leader-follower application.

The autonomous control of the second agricultural machine may be overridable by an operation of the human machine interface when the second graphical user interface is displayed on the display unit.

When the control element is assigned to the second agricultural machine the operator may operate a control element, for example to initiate an emergency braking or any other (safety) action. Then, the control unit executes the commands of the operator according to his operation of the control element instead of control signals of the autonomous control of the second agricultural machine.

A further aspect provides a control system for controlling a first or a second agricultural machine comprising a first agricultural machine, a second agricultural machine and the human machine interface as described before. The human machine interface may be integrated in the first agricultural machine.

Hence, the operator may control the second agricultural machine while being seated in the driver's workplace of the first agricultural machine.

Another aspect includes a method of controlling a first or a second agricultural machine comprising the steps of executing a first control scheme comprising the steps of checking if an input element is in contact with an operator, displaying a first graphical user interface assigned to the first agricultural machine on a display unit while the input element is out of contact with the operator and displaying a second graphical user interface assigned to the second agricultural machine on the display unit while the input element is in contact with the operator.

The method may also comprise the steps of determining a speed of the first agricultural machine, comparing the speed of the first agricultural machine with a speed threshold wherein the first control scheme is executed if the speed of the first agricultural machine exceeds the speed threshold.

The method may also comprise the steps of executing a second control scheme comprising the steps of alternately displaying the first and the second graphical user interface on the display unit if the input element is toggled wherein the second control scheme is executed if the speed of the first agricultural machine is below or equal to the speed threshold.

The first control scheme may also comprise the step of assigning a control element to the second agricultural machine while the input element is in contact with the operator and the second control scheme may also comprise the step of alternately assigning the control element to the first or the second agricultural machine if the input element is toggled.

The method may be a computer-implemented method. The method may be stored in a memory of the control unit and may be carried out by a controller of the control unit. The controller may choose which steps of the method to carry out and which not. The controller may also carry out the steps in any order.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates a control system for controlling a first or a second agricultural machine;
FIG. 2 illustrates a simplified view of a driver's workplace of the first agricultural machine;
FIG. 3 illustrates a display unit displaying a first graphical user interface;
FIG. 4 illustrates the display unit displaying a second graphical user interface;
FIG. 5 illustrates a control unit;
FIG. 6 illustrates a flow diagram representing a method for controlling a first or a second agricultural machine.

### DETAILED DESCRIPTION

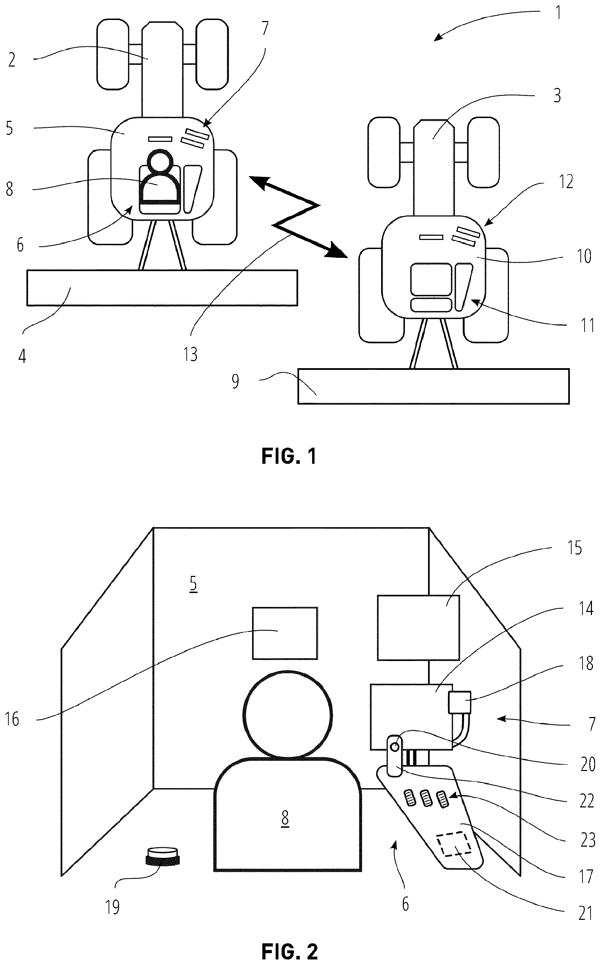

FIG. 1 shows a control system 1 for controlling a first and/or a second agricultural machine 2 and 3. The first agricultural machine 2 is a tractor connected with an implement 4 such as a plough. A driver's workplace 6 including a human machine interface 7 are integrated into a cabin 5 of the first agricultural machine 2. Analogously, the second agricultural machine 3 is a tractor connected with an implement 9 such as a plough. A driver's workplace 11 including a human machine interface 12 are integrated into a cabin 10 of the second agricultural machine 3. The first and the second agricultural machine 2 and 3 may be of the same type as shown in FIG. 1 but they could be also of different types, as for example a harvester (first agricultural machine 2) and a tractor (second agricultural machine 3).

The first as well as the second agricultural machine 2 and 3 can be manually controlled by an operator using the human machine interface of the corresponding agricultural machine, for example to control the speed or the driving direction of the agricultural machine or to control any function of the implement. As can be seen in FIG. 1, an operator 8 is sitting in the driver's workplace 6 of the first agricultural machine 2 and uses the human machine interface 7.

Both agricultural machines 2 and 3 are connected via a wireless data connection 13 to exchange signals and data from one agricultural machine to the other. For example, the first agricultural machine 2 may receive signals and data representing the current status of the second agricultural machine 3 as the speed, the driving direction or any settings of the implement 9, process the received signals and data, generate control signals based on the processed signals and data and send the control signals to the second agricultural machine 3 to adjust the speed or the driving direction of the second agricultural machine 3 or to adjust any setting of the implement 9 of the second agricultural machine 3. Hence, the second agricultural machine 3 can be automatically controlled by the first agricultural machine 2 so that for example the driving direction of second agricultural machine 3 may be controlled parallel to the first agricultural machine 2 or the speed of the second agricultural machine 3 may be adapted according to the speed of the first agricultural machine 2 or the control of the implement 4 of the first agricultural machine 2 may be imitated by the implement 9 of the second agricultural machine 3 for providing a leader-follower functionality. I. e., the manned first agricultural machine 2 is controlled by the operator 8 and the unmanned second agricultural machine 3 executes automatically the same working process of the first agricultural machine 2 in a parallel track so that the second agricultural machine 3 drives and works autonomously. In addition, the operator 8 sitting in the driver's workplace 6 of the first agricultural machine 2 may monitor the second agricultural machine 3 working autonomously and may intervene in the automatic control of the second agricultural machine 3 in case of a failure or any other dangerous situation.

The wireless data connection 13 may be established automatically when the first agricultural machine 2 and the second agricultural machine 3 are getting close enough to each other. Such a data connection may be established in terms of an auto-networking system for achieving an ad hoc network as disclosed in WO 2015/006609 A1, published January 15, 2015, by Paul Matthews.

FIG. 2 shows the interior of the cabin 5 of the first agricultural machine 2. The operator 8 is sitting in the driver's workplace 6 and may operate the human machine interface 7 to control the first or the second agricultural machine 2 or 3, e. g. the speed, the driving direction or any function of the tractors or the implements 4 or 9. The human machine interface 7 comprises several devices as a display unit 14, a display unit 15, a display unit 16, an input element 18, an input element 19, an armrest 17 comprising an input element 20 and control elements 22 and 23 and a control unit 21. The display units 14, 15 and 16, the input elements 18, 19 and 20 and the control element 22 and 23 are connected with the control unit 21.

At least one of the display units 14, 15 and 16 may comprise a touch sensitive display to recognize a touch of an operator 8 to execute a function and to control one of the agricultural machines 2 and 3. Additionally, control elements 22, 23 (buttons, switches, levers, etc.) of the armrest 17 can be used by the operator 8 to control the agricultural machines 2 and 3. The input elements 18, 19 and 20 can be used by the operator 8 to control the display units 14, 15 and 16. Control element 22 is a joystick to control the speed and the driving direction of the agricultural machines. Input element 19 is a foot actuatable switch to be applied or released by a foot of the operator 8. Input element 19 may be designed as a pedal or as a button. Input element 18 is a keyboard integrated into the display unit 14. Input element 20 is a button integrated in the control element 22, e. g. the handle of the joystick. Control element 23 may be levers or potentiometers to raise or lower the implements 4 or 9 for example.

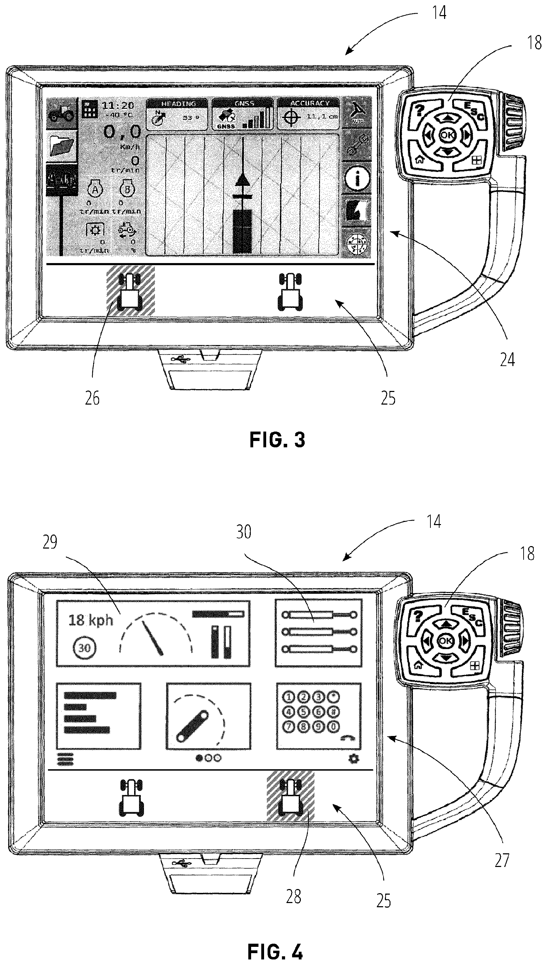

Each display unit 14, 15 and 16 is configured to display a graphical user interface (GUI). For example, display unit 14 may display a first graphical user interface 24 as shown in FIG. 3 and a second graphical user interface 27 as shown in FIG. 4. The graphical user interfaces 24 and 27 may comprise text, numbers, symbols, icons or any other elements to visualize a specific content as the status of the agricultural machine (e. g. speed, fuel consumption, temperature, active/inactive functions, field maps, navigational information, work process parameters, sensor signals, etc.), or settings of any vehicle functions or implement functions.

The first graphical user interface 24 is assigned to the first agricultural machine 2 so that the first graphical user interface 24 represents content in respect of the first agricultural machine 2. The second graphical user interface 27 is assigned to the second agricultural machine 3 so that the second graphical user interface 27 represents content in respect of the second agricultural machine 3. Both graphical user interfaces 24 and 27 comprise also a status bar 25 displaying two tractors and an indicator 26 or 28 highlighting one of the two tractors. The left tractor represents the first agricultural machine 2 and is highlighted by the indicator 26 if the content of the graphical user interface is related to first agricultural machine 2 (see FIG. 3) whereas the right tractor represents the second agricultural machine 3 and is highlighted by the indicator 28 if the content of the graphical user interface is related to second agricultural machine 3 (see FIG. 4).

When the second graphical user interface 27 is displayed on one of the display units 14, 15 and 16 of the human machine interface 7 of the first agricultural machine 2 all needed signals and data for presenting the content of the graphical user interface 27 are transferred from the second agricultural machine 3 to the first agricultural machine 2 via the wireless data connection 13.

As shown in FIG. 4, the graphical user interface 27 comprises a field for speed control 29 and a field for implement control 30. Thus, a speed signal representing the current speed of the second agricultural machine 3 and signals representing the status of the implement 9 are transferred to the first agricultural machine 2 via the data connection 13. The signals are processed by the control unit 21 of the first agricultural machine 2 to generate the content of the field for speed control 29 and the field for implement control 30 of the second graphical user interface 27. The field for speed control 29 shows the current speed of the second agricultural machine 3 and the field for implement control 30 shows the current settings of the implement 9 of the second agricultural machine 3, e. g. the position of the implement 9 relative to the tractor. Any changes of these parameters will be updated in the graphical user interface 27. The parameters may be changed by the operator 8 by operating the control elements 22 or 23. In case of a touch sensitive display unit 14 the field for speed control 29 and a field for implement control 30 may be implemented as additional control elements so that the parameters may be changed by touching a new value of the corresponding parameter of the graphical user interface 27.

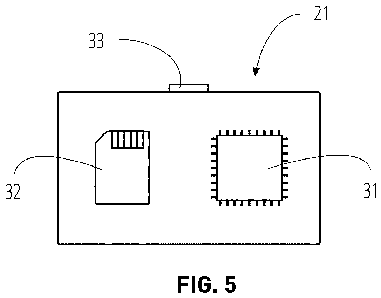

FIG. 5 shows the control unit 21 comprising an interface 33, a controller 31 and a memory 32. The control unit 21 may receive and send signals or data via the interface 33. The interface 33 may be a wireless interface or a connector. The interface 33 may receive and send signals and data via the data connection 13. The controller 31 may store the data or signals received by the control unit 21 in the memory 30. The memory 32 may contain additional data or executable programs, for example in terms of a computer-implemented method, which may be retrieved, processed or carried out by the controller 31. Data or signals resulting from the processing of data or signals or from the execution of a program may be stored to the memory 32 or sent to the interface 33 by the controller 31.

At least one of the input elements 18, 19 and 20 is configured to switch the graphical user interface of the at least one of the display unit 14, 15 and 16 between the first and the second graphical user interface 24 and 27, here for example the foot actuatable input element 19. So, the operator 8 located at the driver's workplace 6 of the first agricultural machine 2 may switch between the first and the second graphical user interface 24 and 27 by operating the input element 19. Additionally, at least one of the input elements 18, 19 and 20 is configured to switch the assignment of the control elements 22 and 23 between the first and the second agricultural machine 2 and 3. So, the operator 8 located at the driver's workplace 6 of the first agricultural machine 2 may switch the assignment between the first and the second agricultural machine 2 and 3 to control either the first or the second agricultural machine 2 or 3 by the control elements 22 and 23.

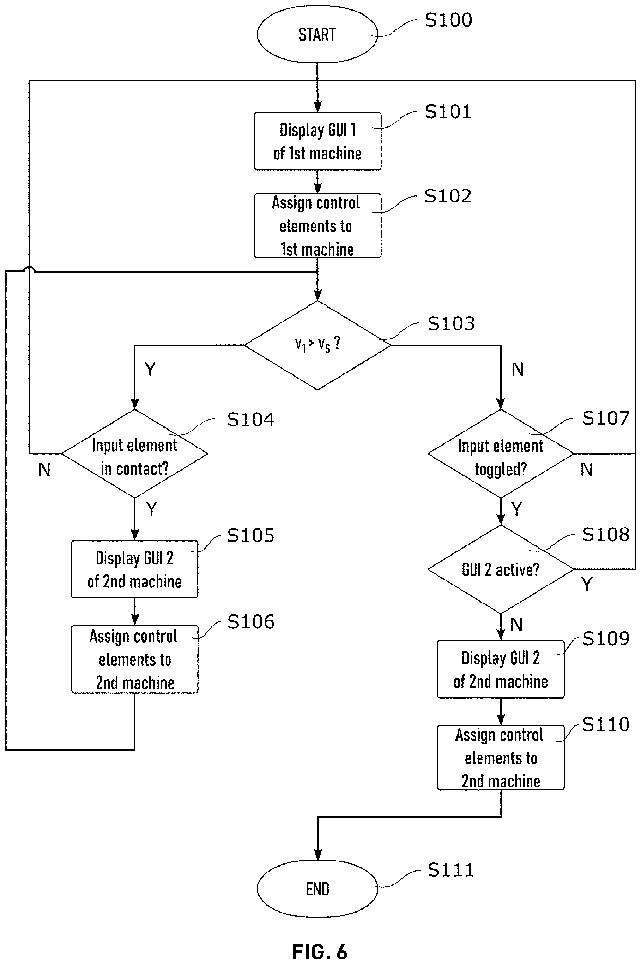

The switching between the first and the second graphical user interface 24 and 27 is executed by the control unit 21 by carrying out a method as schematically depicted in a flow diagram of FIG. 6. The method starts with step S100, e. g. when the first agricultural machine 2 is started. The method proceeds to step S101 and the control unit 21 controls at least one of the display units 14, 15 and 16 to display the first graphical user interface 24 assigned to the first agricultural machine 2. Then, the display unit 14 for example displays the first graphical user interface 24 as shown in FIG. 3.

The method proceeds to step S102 and the control unit 21 assigns the control elements 22 and 23 to the first agricultural machine 2. Hence, the operator 8 may control the driving speed, the driving direction or any other function as the implement 4 of the first agricultural machine 2 by operating the control elements 22 and 23.

The method proceeds to step S103 and the control unit 21 determines the driving speed v₁ of the first agricultural machine 2. A speed sensor may send a speed signal to the control unit 21. Then, the control unit 21 compares the driving speed v₁ of the first agricultural machine 2 with a speed threshold vₛ. The speed threshold vₛ is stored in the memory 32 and can be defined by the operator 8. For example, the speed threshold vₛ can be set to any value between 0 and 6 km/h. If the driving speed v₁ of the first agricultural machine 2 exceeds the speed threshold vₛ the method proceeds to step S104 for executing a first control scheme. Otherwise, the method proceeds to step S107 for executing a second control scheme. I. e., the selection of the first or the second control scheme depends on the driving speed v₁ of the first agricultural machine 2.

Depending on the selected control scheme, the operating principle of the at least one input element 18, 19 and 20 changes, too. According to the first control scheme, the at least one input element 18, 19 and 20 works analogously as a dead man's switch for detecting a permanent contact of the operator 8 with the at least one input element 18, 19 and 20. According to the second control scheme, the at least one input element 18, 19 and 20 works analogously as a toggle switch for detecting a toggling of the at least one input element 18, 19 and 20 instead of a permanent contact.

If the method proceeds to step S104, the control unit 21 determines whether at least one of the input elements 18, 19 and 20 is in contact with the operator 8. If there is no contact between the operator 8 and the at least one input element 18, 19 and 20 the method steps back to step S101 and continues as described above. If the operator 8 permanently touches the at least one input element 18, 19 and 20, e. g. if the operator 8 puts his foot on the foot actuatable input element 19, the method proceeds to step S105. Then, the control unit 21 controls at least one of the display units 14, 15 and 16 to switch from the first graphical user interface 24 assigned to the first agricultural machine 2 to the second graphical user interface 27 assigned to the second agricultural machine 3 and to display the second graphical user interface 27. Then, the display unit 14 for example displays the second graphical user interface 27 as shown in FIG. 4. If the size of the display unit 14 is too small to display the complete content of the second graphical user interface 27 of the second agricultural machine 3 the content of the second graphical user interface 27 can be split up in two parts by the control unit 21. One part may be displayed on the display unit 14 and the other part may be displayed on an additional display unit, e. g. display unit 15. So, the operator 8 seated on the driver's workplace 6 of the first agricultural machine 2 may now monitor the second agricultural machine 3 in a fashion as if he would be seated on the driver's workplace 11 of the second agricultural machine 3.

The method proceeds to step S106 and the control unit 21 assigns the control elements 22 and/or 23 to the second agricultural machine 3. Hence, the operator 8 may take control over the second agricultural machine 3, e. g. adjusting the driving speed and the driving direction by operating the control element 22, while being seated on the driver's workplace 6 of the first agricultural machine 2. The operator 8 may also override any autonomous working process of the second agricultural machine 3, for example to bring the second agricultural machine 3 to standstill in case of a failure or to evade the second agricultural machine 3 when approaching an obstacle.

The method steps back to S103. Steps S103 to S106 will be repeated continuously as long as the driving speed v₁ exceeds the speed threshold vₛ and as long as the at least one input element 18, 19 and 20 is in permanent contact with the operator 8. At the moment the operator 8 releases the contact with the at least one input element 18, 19 and 20 the method steps back to S101 and S102 so that the at least one display unit 14, 15 and 16 switches from the second graphical user interface 27 assigned to the second agricultural machine 3 back to the first graphical user interface 24 assigned to the first agricultural machine 2. In addition, the control elements 22 and 23 are reassigned to the first agricultural machine 2 again.

If the driving speed v₁ of the first agricultural machine 2 is equal or below the speed threshold vₛ the method proceeds to step S107 after step S103 and the control unit 21 determines whether at least one of the input elements 18, 19 and 20 has been toggled by the operator 8. In contrast to step S104 at which the control unit 21 determines whether the at least one input element 18, 19 and 20 is in permanent contact with the operator 8, a short touch of the at least one input element 18, 19 and 20 is sufficient to detect a toggling. If the operator 8 didn't toggle the at least one input element 18, 19 and 20 the method steps back to step S101 and continues as described above. Otherwise the method proceeds to step S108 and the control units 21 determines whether the second graphical user interface 27 assigned to the second agricultural machine 3 is displayed on the at least one display unit 14, 15 and 16 of the first agricultural machine 2. If so, the method steps back to S101 to switch from the second graphical user interface 27 to the first graphical user interface 24 and to reassign the control elements 22 and 23 to the first agricultural machine 2 (step S102). If not, the method proceeds to step S109 and the control unit 21 controls the at least one display unit 14, 15 and 16 to display the second graphical user interface 27 assigned to the second agricultural machine 3 on the at least one display unit 14, 15 and 16. Hence, the control unit 21 controls the at least one display unit 14, 15 and 16 to switch alternately between the first graphical user interface 24 as shown in FIG. 3 and the second graphical user interface 27 as shown in FIG. 4 each time a toggling is detected at step S107.

If the size of the display unit 14 is too small to display the complete content of the second graphical user interface 27 of the second agricultural machine 3 the content of the second graphical user interface 27 can be split up in two parts by the control unit 21. One part may be displayed on the display unit 14 and the other part may be displayed on an additional display unit, e. g. display unit 15. So, the operator 8 seated on the driver's workplace 6 of the first agricultural machine 2 may now monitor the second agricultural machine 3 in a fashion as if he would be seated on the driver's workplace 11 of the second agricultural machine 3.

The method proceeds to step S110 and the control unit 21 assigns the control elements 22 and/or 23 to the second agricultural machine 3. Hence, the operator 8 may take control over the second agricultural machine 3, e. g. adjusting the driving speed and the driving direction by operating the control element 22, while being seated on the driver's workplace 6 of the first agricultural machine 2. The operator 8 may also override any autonomous working process of the second agricultural machine 3, for example to bring the second agricultural machine 3 to standstill in case of a failure or to evade the second agricultural machine 3 when approaching an obstacle.

The method proceeds to step S111 and ends. Then, the control unit 21 may restart the method again (step S100).

All references cited herein are incorporated herein in their entireties. If there is a conflict between definitions herein and in an incorporated reference, the definition herein shall control.

### LISTING OF DRAWING ELEMENTS

1 control system
2 agricultural machine
3 agricultural machine
4 implement
5 cabin
6 workplace
7 human machine interface
8 operator
9 implement
10 cabin
11 workplace
12 human machine interface
13 data connection
14 display unit
15 display unit
16 display unit
17 armrest
18 input element
19 input element
20 input element
21 control unit
22 control element
23 control element
24 graphical user interface
25 status bar
26 indicator
27 graphical user interface
28 indicator
29 speed control
30 implement control
31 controller
32 memory
33 interface

## Claims

1. A human machine interface (7) for controlling a first or a second agricultural machine (2, 3), comprising:
a display unit (14) for displaying a first graphical user interface (24) assigned to the first agricultural machine (2) and a second graphical user interface (27) assigned to the second agricultural machine (3);
at least one input element (18, 19, 20) for switching between the first and the second graphical user interface (24, 27);
a control unit (21) comprising a first control scheme configured to detect a contact of the input element (18, 19, 20) by an operator (8);
**characterized in that**
the first control scheme is configured
to control the display unit (14) to display the second graphical user interface (27) while the input element (18, 19, 20) is in contact with the operator (8); and
to control the display unit (14) to display the first graphical user interface (24) while the input element (18, 19, 20) is out of contact with the operator (8).

2. The human machine interface (7) of claim 1, the control unit (21) further comprising a second control scheme configured
to detect a toggling of the input element (18, 19, 20) by an operator (8); and
to control the display unit (14) to display alternately the first or the second graphical user interface (24, 27) if a toggling of the input element (18, 19, 20) is detected.

3. The human machine interface (7) of claim 1 or 2, the control unit (21) further configured
to determine a speed of the first agricultural machine (2); and
to compare the speed of the first agricultural machine (2) with a speed threshold.

4. The human machine interface (7) of claim 3, wherein the control unit (21) is operating according to the first control scheme if the speed of the first agricultural machine (2) is exceeding the speed threshold.

5. The human machine interface (7) of claim 3 or 4, when referring back to claim 2, wherein the control unit (21) is operating according to the second control scheme if the speed of the first agricultural machine (2) is below or equal to the speed threshold.

6. The human machine interface (7) of any one of claims 3 to 5, wherein the speed threshold is zero.

7. The human machine interface (7) of any one of claims 1 to 6, wherein at least one input element (19) is a foot actuatable switch.

8. The human machine interface (7) of any one of claims 1 to 7, wherein at least one input element (18) is integrated into the display unit (14).

9. The human machine interface (7) of any one of claims 1 to 8, the human machine interface (7) further comprising an additional display unit (15, 16) for displaying an additional graphical user interface assigned to the second agricultural machine (3); wherein the first control scheme is configured
to control the additional display unit (15, 16) to display the additional graphical user interface while the input element (18, 19, 20) is in contact with the operator (8);

10. The human machine interface (7) of any one of claims 2 to 9, further comprising a control element (22, 23);
wherein the first control scheme is configured to assign the control element (22, 23) to the second agricultural machine (3) while the input element (18, 19, 20) is in contact with the operator (8); and
wherein the second control scheme is configured to assign alternately the control element (22, 23) to the first or the second agricultural machine (2, 3) if a toggling of the input element (18, 19, 20) is detected.

11. The human machine interface (7) of any one of claims 1 to 10, wherein the second agricultural machine (3) is an autonomously controlled machine.

12. The human machine interface (7) of claim 11, wherein the autonomous control of the second agricultural machine (3) is overridable by an operation of the human machine interface (7) when the second graphical user interface (27) is displayed on the display unit (14).

13. A control system (1) for controlling a first or a second agricultural machine (2, 3) comprising
a first agricultural machine (2);
a second agricultural machine (3); and
the human machine interface (7) of any one of claims 1 to 12; wherein the human machine interface (7) is integrated in the first agricultural machine (2).

14. A method of controlling a first or a second agricultural machine (2, 3), comprising the steps:
Executing a first control scheme comprising the step:
Checking if an input element (18, 19, 20) is in contact with an operator (8);
**characterized in that** the first control scheme comprises the steps:
displaying a first graphical user interface (24) assigned to the first agricultural machine (2) on a display unit (14) while the input element (18, 19, 20) is out of contact with the operator (8); and
displaying a second graphical user interface (27) assigned to the second agricultural machine (3) on the display unit (14) while the input element (18, 19, 20) is in contact with the operator (8).

15. The method of claim 14, comprising the steps:
Determining a speed of the first agricultural machine (2);
comparing the speed of the first agricultural machine (2) with a speed threshold;
wherein the first control scheme is executed if the speed of the first agricultural machine (2) exceeds the speed threshold.

16. The method of claim 15, comprising the steps:
Executing a second control scheme comprising the steps:
Alternately displaying the first and the second graphical user interface (24, 27) on the display unit (14) if the input element (18, 19, 20) is toggled;
wherein the second control scheme is executed if the speed of the first agricultural machine (2) is below or equal to the speed threshold.

17. The method of claim 16, wherein the first control scheme comprises the step:
Assigning a control element (22, 23) to the second agricultural machine (3) while the input element (18, 19, 20) is in contact with the operator (8); and
wherein the second control scheme comprises the step:
Alternately assigning the control element (22, 23) to the first or the second agricultural machine (2, 3) if the input element (18, 19, 20) is toggled.

## Patentansprüche

1. Mensch-Maschine-Schnittstelle (7) zum Steuern einer ersten oder einer zweiten landwirtschaftlichen Maschine (2, 3), mit:
einer Anzeigeeinheit (14) zum Anzeigen einer ersten grafischen Nutzerschnittstelle (24), die der ersten landwirtschaftlichen Maschine (2) zugeordnet ist, und einer zweiten grafischen Nutzerschnittstelle (27), die der zweiten landwirtschaftlichen Maschine (3) zugeordnet ist;
mindestens einem Eingabeelement (18, 19, 20) zum Schalten zwischen der ersten und der zweiten grafischen Nutzerschnittstelle (24, 27);
einer Steuereinheit (21) mit einem ersten Steuerschema, das ausgebildet ist
um einen Kontakt des Eingabeelements (18, 19, 20) durch einen Bediener (8) zu detektieren;
**dadurch gekennzeichnet, dass**
das erste Steuerschema ausgebildet ist
um die Anzeigeeinheit (14) zum Anzeigen der zweiten grafischen Nutzerschnittstelle (27) anzusteuern, während das Eingabeelement (18, 19, 20) in Kontakt mit dem Bediener (8) ist; und
um die Anzeigeeinheit (14) zum Anzeigen der ersten grafischen Nutzerschnittstelle (24) anzusteuern, während das Eingabeelement (18, 19, 20) außer Kontakt mit dem Bediener (8) ist.

2. Mensch-Maschine-Schnittstelle (7) nach Anspruch 1, wobei die Steuereinheit (21) weiterhin ein zweites Steuerschema aufweist, das ausgebildet ist,
um ein Umschalten des Eingabeelements (18, 19, 20) durch einen Bediener (8) zu detektieren; und
um die Anzeigeeinheit (14) zum alternierenden Anzeigen der ersten oder der zweiten grafischen Nutzerschnittstelle (24, 27) anzusteuern, wenn ein Umschalten des Eingabeelements (18, 19, 20) detektiert wird.

3. Mensch-Maschine-Schnittstelle (7) nach Anspruch 1 oder 2, wobei die Steuereinheit (21) weiterhin ausgebildet ist
um eine Geschwindigkeit der ersten landwirtschaftlichen Maschine (2) zu bestimmen; und
um die Geschwindigkeit der ersten landwirtschaftlichen Maschine (2) mit einer Geschwindigkeitsschwelle zu vergleichen.

4. Mensch-Maschine-Schnittstelle (7) nach Anspruch 3, wobei die Steuereinheit (21) gemäß dem ersten Steuerschema arbeitet, wenn die Geschwindigkeit der ersten landwirtschaftlichen Maschine (2) die Geschwindigkeitsschwelle überschreitet.

5. Mensch-Maschine-Schnittstelle (7) nach Anspruch 3 oder 4, sofern abhängig von Anspruch 2, wobei die Steuereinheit (21) gemäß dem zweiten Steuerschema arbeitet, wenn die Geschwindigkeit der ersten landwirtschaftlichen Maschine (2) unterhalb oder gleich der Geschwindigkeitsschwelle ist.

6. Mensch-Maschine-Schnittstelle (7) nach einem der Ansprüche 3 bis 5, wobei die Geschwindigkeitsschwelle null ist.

7. Mensch-Maschine-Schnittstelle (7) nach einem der Ansprüche 1 bis 6, wobei mindestens ein Eingabeelement (19) ein fußbetätigbarer Schalter ist.

8. Mensch-Maschine-Schnittstelle (7) nach einem der Ansprüche 1 bis 7, wobei mindestens ein Eingabeelement (18) in die Anzeigeeinheit (14) integriert ist.

9. Mensch-Maschine-Schnittstelle (7) nach einem der Ansprüche 1 bis 8, wobei die Mensch-Maschine-Schnittstelle (7) weiterhin eine zusätzliche Anzeigeeinheit (15, 16) zum Anzeigen einer zusätzlichen grafischen Nutzerschnittstelle aufweist, die der zweiten landwirtschaftlichen Maschine (3) zugeordnet ist; wobei das erste Steuerschema ausgebildet ist
um die zusätzliche Anzeigeeinheit (15, 16) zum Anzeigen der zusätzlichen grafischen Nutzerschnittstelle anzusteuern, während das Eingabeelement (18, 19, 20) in Kontakt mit dem Bediener (8) ist.

10. Mensch-Maschine-Schnittstelle (7) nach einem der Ansprüche 2 bis 9, weiterhin mit einem Steuerelement (22, 23);
wobei das erste Steuerschema ausgebildet ist, um das Steuerelement (22, 23) der zweiten landwirtschaftlichen Maschine (3) zuzuordnen, während das Eingabeelement (18, 19, 20) in Kontakt mit dem Bediener (8) ist; und
wobei das zweite Steuerschema ausgebildet ist, um das Steuerelement (22, 23) alternierend der ersten oder der zweiten landwirtschaftlichen Maschine (2, 3) zuzuordnen, wenn ein Umschalten des Eingabeelements (18, 19, 20) detektiert wird.

11. Mensch-Maschine-Schnittstelle (7) nach einem der Ansprüche 1 bis 10, wobei die zweite landwirtschaftliche Maschine (3) eine autonom gesteuerte Maschine ist.

12. Mensch-Maschine-Schnittstelle (7) nach Anspruch 11, wobei die autonome Steuerung der zweiten landwirtschaftlichen Maschine (3) durch eine Tätigkeit der Mensch-Maschine-Schnittstelle (7) übersteuerbar ist, wenn die zweite grafische Nutzerschnittstelle (27) auf der Anzeigeeinheit (14) dargestellt wird.

13. Steuersystem (1) zum Steuern einer ersten oder einer zweiten landwirtschaftlichen Maschine (2, 3) mit
einer ersten landwirtschaftlichen Maschine (2);
einer zweiten landwirtschaftlichen Maschine (3); und
der Mensch-Maschine-Schnittstelle (7) nach einem der Ansprüche 1 bis 12; wobei die Mensch-Maschine-Schnittstelle (7) in die erste landwirtschaftliche Maschine (2) integriert ist.

14. Verfahren zum Steuern einer ersten oder einer zweiten landwirtschaftlichen Maschine (2, 3), mit den Schritten:
Durchführen eines ersten Steuerschemas mit den Schritten:
Prüfen, ob ein Eingabeelement (18, 19, 20) in Kontakt mit einem Bediener (8) ist;
**dadurch gekennzeichnet, dass** das erste Steuerschema die Schritte aufweist:
Anzeigen einer ersten grafischen Nutzerschnittstelle (24), die der ersten landwirtschaftlichen Maschine (2) zugeordnet ist, auf einer Anzeigeeinheit (14), während das Eingabeelement (18, 19, 20) außer Kontakt mit dem Bediener (8) ist; und
Anzeigen einer zweiten grafischen Nutzerschnittstelle (27), die der zweiten landwirtschaftlichen Maschine (3) zugeordnet ist, auf der Anzeigeeinheit (14), während das Eingabeelement (18, 19, 20) in Kontakt mit dem Bediener (8) ist.

15. Verfahren nach Anspruch 14 mit den Schritten:
Bestimmen einer Geschwindigkeit der ersten landwirtschaftlichen Maschine (2);
Vergleichen der Geschwindigkeit der ersten landwirtschaftlichen Maschine (2) mit einer Geschwindigkeitsschwelle;
wobei das erste Steuerschema ausgeführt wird, wenn die Geschwindigkeit der ersten landwirtschaftlichen Maschine (2) die Geschwindigkeitsschwelle überschreitet.

16. Verfahren nach Anspruch 15 mit den Schritten:
Ausführen eines zweiten Steuerschemas mit den Schritten:
alternierendes Anzeigen der ersten und der zweiten grafischen Nutzerschnittstelle (24, 27) auf der Anzeigeeinheit (14), wenn das Eingabeelement (18, 19, 20) umgeschaltet wird;
wobei das zweite Steuerschema ausgeführt wird, wenn die Geschwindigkeit der ersten landwirtschaftlichen Maschine (2) unterhalb oder gleich der Geschwindigkeitsschwelle ist.

17. Verfahren nach Anspruch 16, wobei das erste Steuerschema den Schritt aufweist:
Zuordnen eines Steuerelements (22, 23) zu der zweiten landwirtschaftlichen Maschine (3), während das Eingabeelement (18, 19, 20) in Kontakt mit dem Bediener (8) ist; und
wobei das zweite Steuerschema den Schritt aufweist:
alternierendes Zuordnen des Steuerelements (22, 23) zu der ersten oder der zweiten landwirtschaftlichen Maschine (2, 3), wenn das Eingabeelement (18, 19, 20) umgeschaltet wird.

## Revendications

1. Interface homme-machine (7) destinée à commander une première ou une seconde machine agricole (2, 3), comprenant :
une unité d'affichage (14) destinée à afficher une première interface graphique d'utilisateur (24) affectée à la première machine agricole (2) et une seconde interface graphique d'utilisateur (27) affectée à la seconde machine agricole (3) ;
au moins un élément d'entrée (18, 19, 20) destiné à commuter entre les première et seconde interfaces graphiques d'utilisateur (24, 27) ;
une unité de commande (21) comprenant un premier principe de commande configuré de manière à détecter un contact par un opérateur (8) sur l'élément d'entrée (18, 19, 20) ;
**caractérisée en ce que**
le premier principe de commande est configuré
de manière à commander l'unité d'affichage (14) afin d'afficher la seconde interface graphique d'utilisateur (27) alors que l'élément d'entrée (18, 19, 20) est en contact avec l'opérateur (8) ; et
de manière à commander l'unité d'affichage (14) afin d'afficher la première interface graphique d'utilisateur (24) alors que l'élément d'entrée (18, 19, 20) n'est pas en contact avec l'opérateur (8).

2. Interface homme-machine (7) selon la revendication 1, l'unité de commande (21) comprenant, en outre, un second principe de commande configuré de manière à
détecter un basculement de l'élément d'entrée (18, 19, 20) par un opérateur (8) ; et
commander l'unité d'affichage (14) afin d'afficher en alternance la première ou la seconde interface graphique d'utilisateur (24, 27) si un basculement de l'élément d'entrée (18, 19, 20) est détecté.

3. Interface homme-machine (7) selon la revendication 1 ou 2, l'unité de commande (21) configurée, en outre, de manière à
déterminer une vitesse de la première machine agricole (2) ; et
comparer la vitesse de la première machine agricole (2) à un seuil de vitesse.

4. Interface homme-machine (7) selon la revendication 3, dans lequel l'unité de commande (21) fonctionne selon le premier principe de commande si la vitesse de la première machine agricole (2) excède le seuil de vitesse.

5. Interface homme-machine (7) selon la revendication 3 ou 4, lorsqu'elle se rapporte à la revendication 2, dans lequel l'unité de commande (21) fonctionne selon le second principe de commande si la vitesse de la première machine agricole (2) est inférieure ou égale au seuil de vitesse.

6. Interface homme-machine (7) selon l'une quelconque des revendications 3 à 5, dans lequel le seuil de vitesse est égal à zéro.

7. Interface homme-machine (7) selon l'une quelconque des revendications 1 à 6, dans lequel au moins un élément d'entrée (19) est un commutateur pouvant être activé au pied.

8. Interface homme-machine (7) selon l'une quelconque des revendications 1 à 7, dans lequel au moins un élément d'entrée (18) est intégré dans l'unité d'affichage (14).

9. Interface homme-machine (7) selon l'une quelconque des revendications 1 à 8, l'interface homme-machine (7) comprenant, en outre, une unité d'affichage additionnelle (15, 16) afin d'afficher une interface graphique d'utilisateur additionnelle affectée à la seconde machine agricole (3) ; dans lequel le premier principe de commande est configuré de manière à
commander l'unité d'affichage additionnelle (15, 16) afin d'afficher l'interface graphique d'utilisateur additionnelle alors que l'élément d'entrée (18, 19, 20) est en contact avec l'opérateur (8).

10. Interface homme-machine (7) selon l'une quelconque des revendications 2 à 9, comprenant, en outre, un élément de commande (22, 23) ;
dans lequel le premier principe de commande est configuré de manière à affecter l'élément de commande (22, 23) à la seconde machine agricole (3) alors que l'élément d'entrée (18, 19, 20) est en contact avec l'opérateur (8) ; et
dans lequel le second principe de commande est configuré de manière à affecter en alternance l'élément de commande (22, 23) à la première ou à la seconde machine agricole (2, 3) si un basculement de l'élément d'entrée (18, 19, 20) est détecté.

11. Interface homme-machine (7) selon l'une quelconque des revendications 1 à 10, dans lequel la seconde machine agricole (3) est une machine commandée de façon autonome.

12. Interface homme-machine (7) selon la revendication 11, dans lequel la commande autonome de la seconde machine agricole (3) remplacée par une commande de l'interface homme-machine (7) lorsque la seconde interface graphique d'utilisateur (27) est affichée sur l'unité d'affichage (14).

13. Dispositif de commande (1) destiné à commander une première ou une seconde machine agricole (2, 3) comprenant
une première machine agricole (2) ;
une seconde machine agricole (3) ; et
l'interface homme-machine (7) selon l'une quelconque des revendications 1 à 12 ;
dans lequel l'interface homme-machine (7) est intégrée dans la première machine agricole (2).

14. Procédé de commande d'une première ou d'une seconde machine agricole (2, 3), comprenant les étapes de :
exécution d'un premier principe de commande comprenant l'étape de :
vérification du fait qu'un élément d'entrée (18, 19, 20) est en contact avec un opérateur (8) ;
**caractérisé en ce que** le premier principe de commande comporte les étapes de :
affichage d'une première interface graphique d'utilisateur (24) affectée à la première machine agricole (2) sur une unité d'affichage (14) alors que l'élément d'entrée (18, 19, 20) n'est pas en contact avec l'opérateur (8) ; et
affichage d'une seconde interface graphique d'utilisateur (27) affectée à la seconde machine agricole (3) sur l'unité d'affichage (14) alors que l'élément d'entrée (18, 19, 20) est en contact avec l'opérateur (8).

15. Procédé selon la revendication 14, comprenant les étapes de :
détermination d'une vitesse de la première machine agricole (2) ;
comparaison de la vitesse de la première machine agricole (2) à un seuil de vitesse ;
dans lequel le premier principe de commande est exécuté si la vitesse de la première machine agricole (2) excède le seuil de vitesse.

16. Procédé selon la revendication 15, comprenant les étapes de :
exécution d'un second principe de commande comprenant les étapes de :
affichage, en alternance, des première et seconde interfaces graphiques d'utilisateur (24, 27) sur l'unité d'affichage (14) si l'élément d'entrée (18, 19, 20) est basculé ;
dans lequel le second principe de commande est exécuté si la vitesse de la première machine agricole (2) est inférieure ou égale au seuil de vitesse.

17. Procédé selon la revendication 16, dans lequel le premier principe de commande comporte l'étape de :
affectation d'un élément de commande (22, 23) à la seconde machine agricole (3) alors que l'élément d'entrée (18, 19, 20) est en contact avec l'opérateur (8) ; et
dans lequel le second principe de commande comporte l'étape de :
affectation en alternance de l'élément de commande (22, 23) à la première ou à la seconde machine agricole (2, 3) si l'élément d'entrée (18, 19, 20) est basculé.
